# EUROPEAN PATENT APPLICATION

(11) **EP 3 327 299 A1**
(43) Date of publication of application: **30.05.2018**
(21) Application number: 16200156.4
(22) Date of filing: 23.11.2016
(51) Int. Cl.: F16C 32/04, F16C 39/06, F03B 11/06

(54) **FAIL-SAFE SYSTEM FOR THE CONTROLLED DISCHARGE OF AN ELECTROMAGNET OF A THRUST MAGNETIC BEARING**

(71) Applicant: Forsnetics AB, 752 17 Uppsala (SE)
(72) Inventor: Abrahamsson, Curt Johan David, 753 34 Uppsala (SE); Pérez-Loya, Jesús José, 752 17 Uppsala (SE); Lundin, Claes Urban, 756 46 Uppsala (SE)
(74) Representative: Kransell & Wennborg KB

(57) **Abstract**

The present disclosure relates to a fail-safe system for discharging a magnetic thrust bearing having a rotor and an electromagnetic actuator (7). The fail-safe system comprises a passive electric circuit (17) configured to be connected to the electromagnetic actuator (7) to discharge the electromagnetic actuator (7), wherein the passive electric circuit (17) comprises at least one electric component (23, 25) dimensioned to provide a controlled discharging of the electromagnetic actuator (7). The magnetic thrust bearing system (1) comprises a power supply (11), a control system (13) and switches (19, 21) to selectively connect the power supply (11) and the passive electric circuit (17) with the electromagnetic actuator (7).

## Description

### TECHNICAL FIELD

The present disclosure generally relates to magnetic thrust bearings. In particular, it relates to a fail-safe system for discharging a magnetic thrust bearing.

### BACKGROUND

Thrust bearings provide support to rotating devices such as rotating machines. They may for example give axial support to a generator-turbine shaft-line. Thrust bearings are thus normally subjected to high axial forces.

A thrust bearing comprises a rotating component, the rotor, and a static component, the stator. The stator typically supports the rotor, which is configured to rotate relative to the stator. Friction is thereby generated between these components. In order to reduce the friction between the rotor and the stator, there may be provided a friction-reducing means such as a fluid film e.g. an oil film, at the interface between the rotor and the stator. Friction losses are however substantial even in the presence of such friction-reducing means.

In order to further reduce the friction between the rotating and the static component of a thrust bearing, it has been developed a magnetic thrust bearing, which lifts the load applied to the conventional thrust bearing with an electromagnet. Such a magnetic thrust bearing also comprises a rotor and an electromagnet which forms part of the stator, an example of which is disclosed in the publication entitled "Magnetic thrust bearing" by T. Nakata, published in the Fuji Denki Review, Vol. 4, No. 2 in 1958. The magnetic thrust bearing of that disclosure was particularly directed to vertical type water-wheel generators.

A magnetic thrust bearing must remain reliable in all imaginable operating conditions, in particular transient operational conditions such as start-up modes and load rejection/runaways. The current to the stator, also referred to as the electromagnetic actuator, is therefore generally controllable by means of a power supply which in turn is controlled by a control system which receives position- or force data from sensors provided on the magnetic thrust bearing. US 6707200 B2, for example, discloses a fixed gain electromagnetic actuator for controlling the position of a body including at least two pairs of a magnetically permeable pole spaced from the body, bias coils about each pole, separate control coils about each pole. A control source is used for control coils providing a current in the control coils for producing an increase in the magnetic field on one side of a body and a corresponding equivalent decrease in the magnetic field on the opposing side of the body to compensate for any external upsetting forces acting on the body.

### SUMMARY

A general drawback with power supply control of the stator is that there is a risk that the power supply fails due to component failure, and that this failure occurs at a critical time, when current control of the stator would be desirable, for example in the event of a load rejection in hydroelectric power plant applications.

For example, in the event of a load rejection, water flow onto the turbines must promptly be stopped in order to avoid a runaway, i.e. an undesired increase in generator speed above the nominal generator speed. The conventional thrust bearing as well as the magnetic thrust bearing will therefore be subjected to a substantial load reduction transient. This transient could turn out to be catastrophic in case no controlled discharge of the electromagnetic actuator can be provided at this critical time.

In view of the above, an object of the present disclosure is to provide a fail-safe system for a magnetic thrust bearing which solves or at least mitigates the problems of the prior art.

There is hence according to a first aspect of the present disclosure provided a fail-safe system for discharging a magnetic thrust bearing having a rotor and an electromagnetic actuator, wherein the fail-safe system comprises: a passive electric circuit configured to be connected to the electromagnetic actuator to discharge the electromagnetic actuator, wherein the passive electric circuit comprises at least one electric component dimensioned to provide a controlled discharging of the electromagnetic actuator.

The passive electric circuit with its passive electric component(s) is not dependent of external power control to operate, i.e. to discharge the electromagnetic actuator in the event that the electromagnetic actuator must be discharged. It ensures that controlled discharging of the electromagnetic actuator can be provided even if for example a power supply configured to normally control the current fed to the electromagnetic actuator is subjected to a failure or power disruption. Controlled discharge may thus be provided under essentially any operating condition. An essentially fail-safe discharging of the electromagnetic actuator may thus be provided.

Controlled discharging is to be construed as a discharge time/curve of the electromagnetic actuator which is slow enough not to provide too high stress too fast on the primary thrust bearing, but fast enough to compensate for the transient obtained due to an axial load disruption. The at least one passive electric component is dimensioned to provide a predefined discharging, from a predefined energy level, of the electromagnetic actuator. The predefined energy level may for example be the nominal energy level of the electromagnetic actuator, which can be seen as a very large inductance that includes a coil configured to store large quantities of energy.

According to one embodiment the at least one passive electric component is dimensioned to provide a controlled discharging of the electromagnetic actuator based on a predefined axial load disruption characteristic, the at least one passive electronic component being dimensioned so that the controlled discharge is slow enough not to damage a primary thrust bearing, but fast enough to compensate for the transient obtained due to an axial load disruption. In particular, the at least one passive electronic component may be dimensioned so that the controlled discharge is fast enough that no negative lift force will be applied to the rotor in the event of a transient-type axial load disruption.

According to one embodiment the predefined axial load disruption characteristic is a load rejection characteristic. Load rejection may be seen as a "worst case" scenario with regards to transient behaviour on the magnetic thrust bearing especially in hydroelectric power plant applications, and the passive electric circuit, in particular the at least one passive electric component, is dimensioned to provide a controlled discharge of the electromagnetic actuator as if the reason for the discharge action would be a load rejection. In case of a less severe transient or any other reason for discharging the electromagnetic actuator, the "worst case" design will provide a controlled discharge of the electromagnetic actuator in essentially all situations that may occur.

One embodiment comprises a sensor configured to detect an operating parameter of one of a power supply configured to power the electromagnetic actuator, a function of a generator and the magnetic thrust bearing , wherein the passive electric circuit is configured to be connected to the electromagnetic actuator to discharge the electromagnetic actuator in the event that the sensor detects that the operating parameter deviates from a normal operating parameter state.

One embodiment comprises a sensor configured to detect an operating parameter related to the position and/or force on a generator which the magnetic thrust bearing is configured to support, wherein the passive electric circuit is configured to be connected to the electromagnetic actuator to discharge the electromagnetic actuator in the event that the sensor detects that the operating parameter deviates from a normal operating parameter state.

The rotational speed of the rotor of the generator, as well as the power output may be used to determine whether the passive electric circuit is to be connected to the electromagnetic actuator to discharge the electromagnetic actuator. For example if the rotor for some reason gets pulled out of the safe operating region, or the magnetic thrust bearing is producing a measured force outside the expected region, also then the passive electric circuit may be connected to the electromagnetic actuator to discharge the electromagnetic actuator.

The operating parameter may be an electrical operating parameter, for example a current or voltage of the power supply, or it may be a mechanical parameter, for example the operating temperature of the power supply. Hereto, the sensor is configured to detect whether the power supply operates properly or not, and the passive electric circuit is configured to be connected to the electromagnetic actuator to discharge the electromagnetic actuator in case the power supply is subjected to a fault. In this case, the power supply may be configured to be disconnected from the electromagnetic actuator so that the electromagnetic actuator is not powered by the power supply when discharging thereof is desired.

According to one embodiment the at least one passive electric component is dimensioned to provide a predefined discharge curve of the energy stored in the electromagnetic actuator to thereby provide the controlled discharging of the electromagnetic actuator.

According to one embodiment the passive electric circuit comprises at least one resistor.

According to one embodiment the passive electric circuit comprises at least one inductor.

According to one embodiment the passive electric circuit comprises at least one capacitor.

By means of passive electric components, a number of discharge characteristics may be obtained, based on the one desired for a particular application. Such discharge characteristics include linear discharge of the electromagnetic actuator, by using one or more resistors only, or nonlinear discharge by using nonlinear components such as inductors and/or capacitors, typically in combination with one or more resistors.

According to one embodiment the passive electric circuit is dimensioned for discharging a vertical magnetic thrust bearing of a hydroelectric power plant.

One embodiment comprises a control system configured to control a power supply to discharge the electromagnetic actuator under normal operation conditions of the power supply, wherein the control system is configured to connect the passive electric circuit to the electromagnetic actuator in the event that the power supply is subjected to a failure.

There is according to a second aspect of the present disclosure provided a magnetic thrust bearing system comprising: a magnetic thrust bearing including a rotor, an electromagnetic actuator configured to magnetically attract the rotor, and a fail-safe system according to the first aspect presented herein.

According to one embodiment the magnetic thrust bearing is dimensioned to support a generator of a power plant.

According to one embodiment the magnetic thrust bearing is dimensioned to support a generator of a hydroelectric power plant.

There is according to a third aspect of the present disclosure provided a method of discharging an electromagnetic actuator of a magnetic thrust bearing including the electromagnetic actuator and a rotor, wherein the method comprises: connecting a passive electric circuit to the electromagnetic actuator to discharge the electromagnetic actuator, the passive electric circuit comprising at least one electric component dimensioned to provide a controlled discharging of the electromagnetic actuator.

According to one embodiment the at least one passive electric component is dimensioned to provide a controlled discharging of the electromagnetic actuator based on a predefined axial load disruption characteristic.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a side view of an example of magnetic thrust bearing system;
Fig. 2 schematically shows a longitudinal section of the magnetic thrust bearing system in Fig. 1;
Fig. 3a schematically shows a circuit diagram of a general example of a magnetic thrust bearing system;
Fig. 3b is an example of a circuit diagram of the magnetic thrust bearing system;
Figs 4a-4b shows a fail-safe system of the magnetic thrust bearing system in operation; and
Fig. 5 shows a method of discharging a magnetic thrust bearing.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

The present disclosure relates to a fail-safe system for discharging a magnetic thrust bearing including a rotor and an electromagnetic actuator, i.e. a stator. The fail-safe system includes a passive electric circuit which is connectable to the magnetic thrust bearing. The passive electric circuit includes one or more passive electric components which are dimensioned to provide a controlled discharging of the electromagnetic actuator.

In normal use, the passive electric circuit is disconnected from the electromagnetic actuator. However, if a part or parts of the passive electric circuit is/are used for other applications under normal operation, for example as capacitor bank in a power supply, as will be described in more detail below, then this part or these parts may be connected to the electromagnetic actuator also in normal use, however in a different manner and for a different purpose. All of the electric components defining the passive electric circuit are however only connected simultaneously to the electromagnetic actuator in case of a discharge operation.

In the event that the electromagnetic actuator is to be discharged, in particular if the primary controllable power supply of the electromagnetic actuator is subjected to a fault or in case of manual operation by an operator, the passive electric circuit is connected to the electromagnetic actuator to discharge it in a controlled manner. Due to the passive electric circuit, the fail-safe system is essentially fail-safe and provides a reliable means for discharging the electromagnetic actuator substantially under any condition.

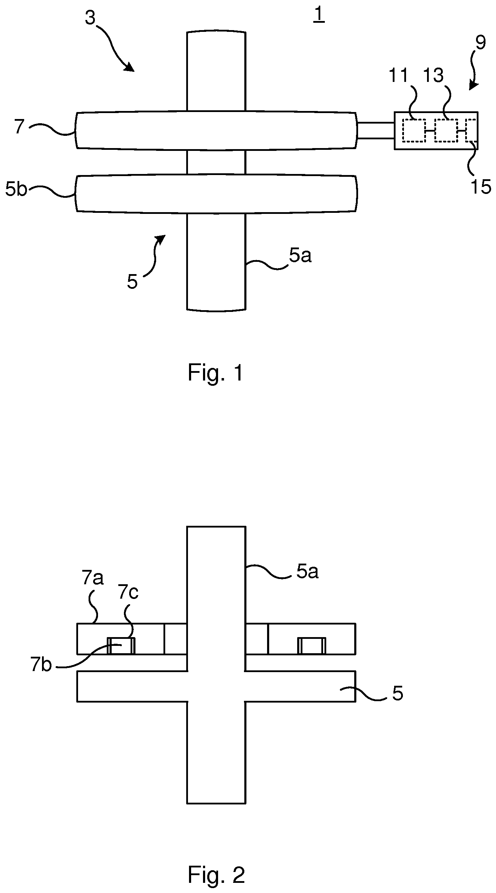

With reference to Figs 1 to 3a an example of a magnetic thrust bearing system will now be described.

The exemplified magnetic thrust bearing system 1 includes a magnetic thrust bearing 3. The magnetic thrust bearing 3 comprises an electromagnetic actuator 7, i.e. a stator, and a rotor 5 which includes a rotor shaft 5a and a rotor disc 5b rotationally fixed relative to the rotor shaft 5a. The electromagnetic actuator 7 is configured to receive the rotor shaft 7a. Hereto, the electromagnetic actuator 7 has a through-opening through which the rotor shaft 5a is configured to extend. The rotor 5 is configured to be rotatably arranged relative to the electromagnetic actuator 7.

According to one example, the magnetic thrust bearing 3 may be installed in a vertical configuration, with the electromagnetic actuator 7 being located vertically above the rotor 5. The rotor shaft 5a could however alternatively be configured to be installed in a horizontal manner instead of the exemplified vertical orientation.

In the longitudinal section shown in Fig. 2, it can be seen that the electromagnetic actuator 7 includes a magnetic core 7a, for example a solid core such as a solid iron core or a solid steel core, or a laminated core such as a laminated steel core, and a coil 7b configured to be fed with current to magnetise the electromagnetic actuator 7. The magnetic core 7a may according to one example be provided with a slot 7c extending around the through-opening of the stator 7. The slot 7c may be configured to receive the coil 7b. The electromagnetic actuator 7 is hence configured to be fed with electric power in order to magnetically attract the rotor 5.

The magnetic thrust bearing system 1 may furthermore include a power supply 11, for example a power converter such as an AC/DC converter, and a control system 13, which according to the present example are included in an electric cabinet 9. The power supply 11, e.g. the power supply is configured to be connected to the electromagnetic actuator 7, in particular to the coil 7b. The control system 13 is configured to control the power supply 11, e.g. the power supply, to thereby control the amount of current to be fed to the electromagnetic actuator 7.

The magnetic thrust bearing system 1 may furthermore comprise one or more sensor(s) 15 configured to detect any fault or undesired operation of the power supply 11 and/or the control system 13. To this end, the sensor 15 is configured to detect an operating parameter of the power supply 11 and/or of the control system 13. Such an operating parameter may for example be an electric parameter such as a voltage or a current of the power supply 11, e.g. of a power supply, for example of semiconductor switch devices such as insulated gate bipolar transistors (IGBTs) or thyristors contained therein, or of a mechanical parameter, such as an operating temperature of the power supply and/or the control unit.

The generator itself may be provided with a plurality of sensors, e.g. a rotor speed sensor, a sensor for determining the axial position of the rotor, and/or a sensor for measuring the lift-force created by the electromagnetic actuator 7, that are relevant for the demagnetization of the electromagnetic actuator, and which may cause triggering of the discharging of the magnetic thrust bearing 3.

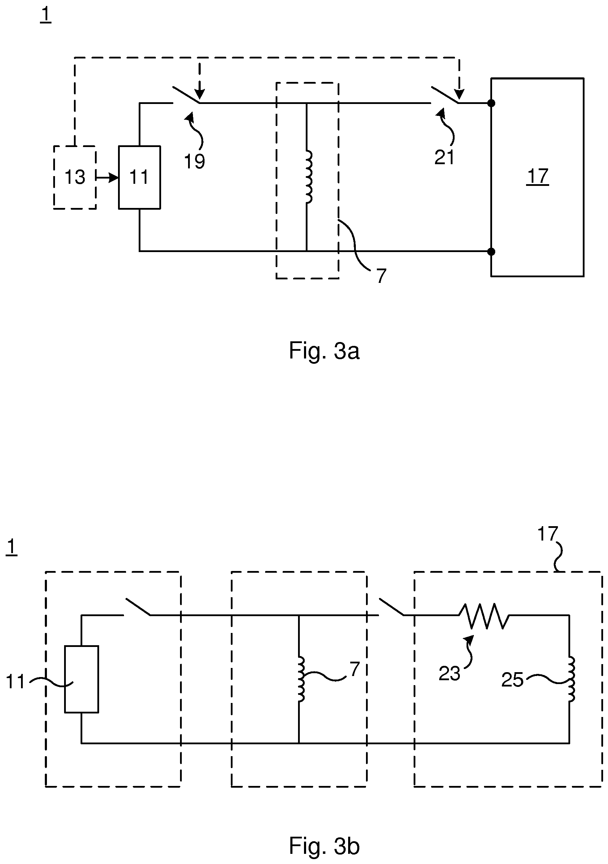

With reference to Fig. 3a, the magnetic thrust bearing system 1 also comprises a passive electric circuit 17 configured to be connected to the electromagnetic actuator 7 to discharge the electromagnetic actuator 7. The passive electric circuit 17 forms part of a fail-safe system for discharging the electromagnetic actuator 7 in a reliable manner. The fail-safe system may additionally comprise the sensor 15 and the control system 13.

The passive electric circuit 17 comprises one or more passive electric components, forming the passive electric circuit 17. A passive electric component is a resistor, a capacitor or an inductor. The passive electric circuit 17 is designed to provide a predefined discharge characteristic or discharge curve of the electromagnetic actuator 7 when connected to the electromagnetic actuator 7. The discharge characteristic is determined by the electrical parameter size or dimension(s) of the passive electric component(s), i.e. resistance, capacitance and inductance for a resistor, a capacitor and an inductor, respectively, and by the type or combination of types of passive electric components used for creating the passive electric circuit 17.

Together with the passive electric circuit 17, the coil 7b and in particular the coil resistance and the coil inductance, determines the discharge characteristics of the electromagnetic actuator 7. Hereto, the passive electric circuit 17 is generally designed and dimensioned with the coil parameters, i.e. coil resistance and coil inductance in mind to obtain the desired discharge characteristics. The discharge characteristic is hence determined by the passive electric circuit 17 which is connectable to the electromagnetic actuator 7, and by the design of the electromagnetic actuator.

According to one variation, the geometric shape of the magnetic core 7a, typically a solid magnetic core, may be designed so that electrical parameters of the electromagnetic actuator 7 are adapted such that the desired discharge characteristics are obtained when connected to the passive electric circuit 17. Both the magnetic core and the coil of the electromagnetic actuator may thus contribute to the discharge characteristics. The number of passive electric components for the passive electric circuit 17 may thus be reduced. The design of the electromagnetic actuator 7 is in this case beneficially made in such a way that the magnetic properties of the electromagnetic actuator 7 are unaffected.

According to one variation, the capacitor bank included in the DC-link of the power supply, in case the power supply is a power converter, may be utilised in the passive electric circuit 17. To this end, according to one example the capacitor bank of the power converter may form part of the passive electric circuit 17. In this manner, the capacitor bank may be utilised in a beneficial manner to absorb energy from the electromagnetic actuator 7 when discharging it.

The magnetic thrust bearing system 1 may comprise a first switch 19 configured to switch the power supply 11 in and out of connection with the electromagnetic actuator 7 and a second switch 21 configured to switch the passive electric circuit 17 in and out of connection with the electromagnetic actuator 7. According to one example, the control system 13 is configured to operate the first switch 19 and of the second switch 21, as schematically indicated by the dashed lines.

Fig. 3b shows an example of a passive electric circuit 17. The exemplified passive electric circuit 17 includes a first passive electric component 23 exemplified by a resistor and a second passive electric component 25 series connected with the first passive electric component 23 and exemplified by an inductance. It should be understood that a great plurality of different passive electric circuit 17 configurations can be provided, and the particular configuration of the passive electric circuit 17 is determined by the particular discharge curve desired and the energy storage capability of the electromagnetic actuator 7.

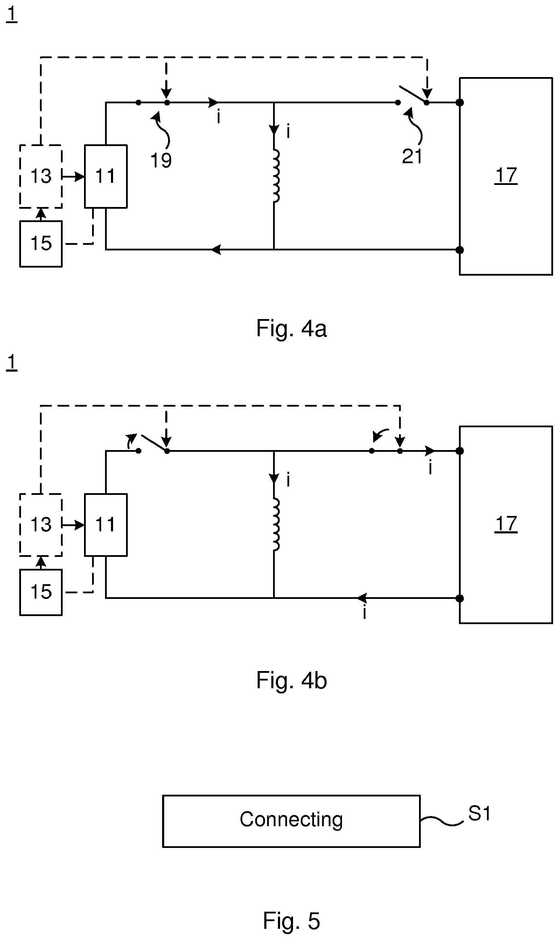

With reference to Figs 4a and 4b the operation of the magnetic thrust bearing system 1, and in particular of the fail-safe system, will now be described. In Fig. 4a, the magnetic thrust bearing system 1 is operating under normal conditions. The first switch 19 is in this case in a closed position and the second switch 21 is in an open position. A current i thus flows through the left-hand circuit in Fig. 4a, i.e. from the power supply 11, through the electromagnetic actuator 7 and back to the power supply 11.

Assuming that the sensor 15 detects that an operating parameter of the power converter deviates from a normal operating parameter state, for example due to an internal short-circuit in one of the semiconductor switching devices, in the case the power supply is a power converter.

The power supply 11 is normally operable to handle any situation regarding load conditions on the magnetic thrust bearing, for example load rejection. However, due to the detected deviation, the passive electric circuit 17 is in a step S1 connected to the electromagnetic actuator 7, as shown in Fig. 5. In particular, the control system 13, which may be configured to receive and analyse signals provided by the sensor 15, provides a control signal to the second switch 21 to close and a control signal to the first switch 19 to open. The right-hand circuit is thus closed, and the left-hand circuit is opened. Current will thus flow from the electromagnetic actuator 7 through the passive electric circuit 17 and back to the electromagnetic actuator 7. The electromagnetic actuator 7 will in this manner be discharged by the passive electric circuit 17. The discharge characteristics of the passive electric circuit 17 may for example be those suitable in the event of a load rejection. In this case, in the event that the power supply is subjected to a fault at the same time that a load rejection occurs, a controlled discharge of the electromagnetic actuator 7 will be ensured by the fail-safe system.

As an alternative, or in addition to automatic operation of the passive electric circuit, an operator may according to one variation manually operate the passive electric circuit, for example by pressing a button, whereby the second switch 21 would close and the first switch 19 would open.

The magnetic thrust bearing 3 may be configured to act as an auxiliary support for a primary thrust bearing, i.e. a mechanical thrust bearing, for example for a vertical turbine-generator assembly of a hydroelectric power plant. Such a mechanical thrust bearing may also comprise a rotor and a stator, and e.g. a fluid-film arranged at the interface between the rotor and the stator. The magnetic thrust bearing 3 may thus provide additional support to the mechanical bearing to reduce friction losses between the rotor and stator of the mechanical thrust bearing.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A fail-safe system for discharging a magnetic thrust bearing (3) having a rotor (5) and an electromagnetic actuator (7), wherein the fail-safe system comprises:
a passive electric circuit (17) configured to be connected to the electromagnetic actuator (7) to discharge the electromagnetic actuator (7),
wherein the passive electric circuit (17) comprises at least one electric component (23, 25) dimensioned to provide a controlled discharging of the electromagnetic actuator (7).

2. The fail-safe system as claimed in claim 1, wherein the at least one passive electric component (23, 25) is dimensioned to provide a controlled discharging of the electromagnetic actuator based on a predefined axial load disruption characteristic, the at least one passive electronic component being dimensioned so that the controlled discharge is slow enough not to damage a primary thrust bearing, but fast enough to compensate for the transient obtained due to an axial load disruption.

3. The fail-safe system as claimed in claim 2, wherein the predefined axial load disruption characteristic is a load rejection characteristic.

4. The fail-safe system as claimed in any of the preceding claims, comprising a sensor (15) configured to detect an operating parameter of one of a power supply (11) configured to power the electromagnetic actuator (7), a function of a generator and the magnetic thrust bearing (3), wherein the passive electric circuit (17) is configured to be connected to the electromagnetic actuator (7) to discharge the electromagnetic actuator (7) in the event that the sensor (15) detects that the operating parameter deviates from a normal operating parameter state.

5. The fail-safe system as claimed in any of the preceding claims, wherein the at least one passive electric component (23, 25) is dimensioned to provide a predefined discharge curve of the energy stored in the electromagnetic actuator (7) to thereby provide the controlled discharging of the electromagnetic actuator (7).

6. The fail-safe system as claimed in any of the preceding claims, wherein the passive electric circuit (17) comprises at least one resistor (23).

7. The fail-safe system as claimed in any of the preceding claims, wherein the passive electric circuit (17) comprises at least one inductor (25).

8. The fail-safe system as claimed in any of the preceding claims, wherein the passive electric circuit (17) comprises at least one capacitor.

9. The fail-safe system as claimed in any of the preceding claims, wherein the passive electric circuit (17) is dimensioned for discharging a vertical magnetic thrust bearing of a hydroelectric power plant.

10. The fail-safe system as claimed in any of the preceding claims, comprising a control system (13) configured to control a power supply to discharge the electromagnetic actuator (7) under normal operation conditions of the power supply (11), wherein the control system (13) is configured to connect the passive electric circuit (17) to the electromagnetic actuator (7) in the event that the power supply (11) is subjected to a failure.

11. A magnetic thrust bearing system (1) comprising:
a magnetic thrust bearing (3) including a rotor (5) an electromagnetic actuator (7) configured to magnetically attract the rotor (5), and
a fail-safe system as claimed in any of claims 1-10.

12. The magnetic thrust bearing system (1) as claimed in claim 11, wherein the magnetic thrust bearing is dimensioned to support a generator of a power plant.

13. The magnetic thrust bearing system (1) as claimed in claim 11, wherein the magnetic thrust bearing is dimensioned to support a generator of a hydroelectric power plant.

14. A method of discharging an electromagnetic actuator (7) of a magnetic thrust bearing (3) including the electromagnetic actuator (7) and a rotor (5), wherein the method comprises:
connecting (S1) a passive electric circuit (17) to the electromagnetic actuator (7) to discharge the electromagnetic actuator (7),
the passive electric circuit (17) comprising at least one electric component (23, 25) dimensioned to provide a controlled discharging of the electromagnetic actuator (7).

15. The method as claimed in claim 14, wherein the at least one passive electric component (23, 25) is dimensioned to provide a controlled discharging of the electromagnetic actuator (7) based on a predefined axial load disruption characteristic.
